# EUROPÄISCHE PATENTSCHRIFT

(11) **EP 3 034 927 B1**
(45) Veröffentlichungstag und Bekanntmachung des Hinweises auf die Patenterteilung: **14.08.2019**
(21) Anmeldenummer: 15003270.4
(22) Anmeldetag: 18.11.2015
(51) Int. Cl.: F16M 11/22, H02G 3/04, F26B 3/08

(54) **STÜTZVORRICHTUNG FÜR WIRBELSCHICHTANLAGEN**
SUPPORT DEVICE FOR FLUIDISED BED INSTALLATIONS
DISPOSITIF D'APPUI POUR INSTALLATION À LIT FLUIDISÉ

(30) Priorität: 24.11.2014 DE 102014017258
(43) Veröffentlichungstag der Anmeldung: 22.06.2016
(73) Patentinhaber: ACG Pharma Technologies Private Limited, Mumbai 400021 (IN)
(72) Erfinder: Rohrwasser, Michael, D-79258 Hartheim (DE); Böcherer, Thomas, 79418 Schliengen (DE); Tondar, Matthias, 79688 Hausen i.W. (DE)
(74) Vertreter: Basra, Sandeep

(56) Entgegenhaltungen:
- EP-A1- 0 781 949
- DE-A1- 3 509 989
- DE-A1- 4 220 844
- DE-C1- 3 610 151

## Beschreibung

Stützvorrichtung, insbesondere für Wirbelschichtanlagen, die an mindestens einer Stelle mit der Wirbelschichtanlage verbunden ist.

Wirbelschicht im Sinne der Erfindung bezeichnet eine Schüttung eines Wirbelgutes, meistens Feststoffpartikel, die in ein Gas als Wirbelmedium eingebracht werden. Wirbelschichten werden in Verfahren zur Trocknung, Granulation, Partikelbefilmung (Coating), Befeuerung oder auch zur Kaffeeröstung eingesetzt.

Eine Wirbelschichtanlage weist im Wesentlichen ein Unter- und ein Oberteil auf, wobei das Oberteil nochmals in eine mittlere Expansionszone und eine obere Filterzone unterteilbar ist. Das Unterteil ist nach unten abgeschlossen und in der Regel zylinderförmig ausgestaltet. Es dient in erster Linie dazu, einen vertikal nach oben gerichteten Strom des Wirbelmediums, wie insbesondere Gas und Luft, in Richtung der Expansionszone zu erzeugen. Das Wirbelgut selbst liegt im Allgemeinen pulver-, granulat- oder pellet-förmig in der - mittleren - Expansionszone vor. Dabei ist die Unterseite der Expansionszone mit sieblöcherförmigen Durchlässen versehen, die ein Durchfallen des Wirbelguts vermeiden, hingegen ein Durchströmen des Wirbelmediums erlauben. Die Expansionszone kann kegelstumpfförmig ausgebildet sein. Oberhalb der Expansionszone angebracht ist eine Filterzone mit darin befindlichen Filtern. Alle drei Komponenten einer Wirbelschichtanlage, Unterteil, Expansionszone und Filterzone, sind miteinander verbunden und gegenüber dem Äußeren abgedichtet.

Das Wirbelgut kann mit einer gegebenenfalls pharmazeutisch wirksamen Schicht überzogen sein. Es wird durch den nach oben gerichteten Strom des Wirbelmediums erfasst. Die Filter halten das Wirbelgut zurück und sind nur für das Wirbelmedium durchlässig.

Die Komponenten einer Wirbelschichtanlage müssen stabil gehalten und getragen werden. Hierzu sind gattungsgemäße säulenförmige Stützvorrichtungen mit geschlossenem Querschnitt bekannt, die also als Rohre ausgebildet sind und zwar aus Stabilitätsgründen. Grund hierfür ist, dass geschlossene Profile ein sehr hohes Widerstandsmoment aufweisen und somit materialoptimiert eingesetzt werden können. Ein weiterer Grund für geschlossene Profile im Bereich der Lebensmittel- und Pharmaindustrie ist die einfache Reinigung im Sinne der Guten Herstellungspraxis (GMP - Good Manufacturing Practice Guidelines - http://ec.europa.eu/health/documents/eudralex/vol-4/index en.htm).

Die Stützvorrichtungen sind an ihrer Unterseite fest mit dem Boden der Produktionsstätte oder einer Bodenplatte verbunden, was ihnen den notwendigen Halt verleiht. Die Stützvorrichtungen sind in der Regel fest mit dem Oberteil der Wirbelschichtanlage, bestehend aus Expansions- und Filterzone, verbunden. Aufgrund der nicht auszuschließenden Explosionsgefahr während eines Wirbelschichtprozesses muss diese Verbindung der Stützvorrichtung mit der Wirbelschichtanlage hinreichend starken Halt gewährleisten, damit ein Austritt des Wirbelmediums und des Wirbelproduktes wirksam unterbunden wird. Demgegenüber muss die Verbindung von Unterteil mit Oberteil einerseits und Stützvorrichtung und Unterteil so sein, dass Explosionsdruck aufgenommen wird, erstere Verbindung durch eine gewisse Beweglichkeit unter Sicherstellung der Dichtigkeit, letztgenannte Verbindung dieser Beweglichkeit rechnungtragend. Auf jeden Fall muss die Stützvorrichtung selbst hohe Stabilität aufweisen.

Gängige Ausführungen zeigen Stützvorrichtungen mit rechteckförmigem, geschlossenem Hohlprofil. Köpfe von Befestigungsschrauben an der Stützvorrichtung, die durch das gesamte Profil hindurch geführt sind, ragen seitlich aus dem Profil heraus und sind daher schlecht zu reinigen.

Eine Wirbelschichtanlage ist mit einer Vielzahl von Sensoren und Aktoren ausgerüstet, die wiederum mit Energien versorgt werden müssen, d.h. Verbindungskanal und Schläuche sind mit diesen zu verbinden. Diese wiederum können insbesondere nur offen liegend auf der Anlagen- oder Stützenoberfläche montiert werden und bilden somit eine schwer und undefiniert zu reinigende Oberfläche und damit ein hohes Kontaminationsrisiko.

Ebenso verhält sich die Sachlage mit Sprühdüsen, welche prozessbedingt an der Anlage eingesetzt werden. Diese müssen mit Flüssigkeiten und Druckluft versorgt werden. Auch hier werden die Rohr- und Schlauchleitungen quer über die gesamte Anlagenoberfläche verlegt und stellen ein erhebliches Kontaminationsrisiko dar, da die Leitungen nur schlecht zu reinigen sind.

Ein Verlegen und Führen von Leitungen zu Komponenten der Wirbelschichtanlage innerhalb der Stützvorrichtung wäre nur unter erheblichem Aufwand möglich. Will man nach Montage der Stützvorrichtung Leitungen der Wirbelschichtanlage zuführen, so müssen diese daher regelmäßig außerhalb der Stützvorrichtung verlaufen. Damit ist die Gefahr einer unerwünschten äußeren Einwirkung und eine schlechte Reinigbarkeit auf die Leitungen und die Gefahr der Beschädigung derselben gegeben. Verbesserungen werden seit vielen Jahren versucht, haben aber nicht zu einem Erfolg geführt.

Es ist daher die Aufgabe der Erfindung, eine verbesserte und kostenoptimierte Stützvorrichtung zur Halterung von Wirbelschichtanlagen zu schaffen, die dennoch bei hinreichender Stabilität in einfacher Weise insbesondere ein geschütztes Führen von Leitungen der Wirbelschichtanlage ermöglicht.

Erfindungsgemäß wird die Aufgabe durch eine gattungsgemäße Stützvorrichtung gelöst, welche gekennzeichnet ist durch ein U-Profil mit einer Öffnung an einer Seite und einer zerstörungsfrei entfernbaren Abdeckung der Öffnung. Offenlegungsschrift DE3610151 offenbart z.B. so eine gattungsgemäße Stützvorrichtung.

Die Erfindung beinhaltet ebenfalls eine Wirbelschichtvorrichtung mit einer Wirbelschichtanlage und einer erfindungsgemäßen Stützvorrichtung.

Das U-Profil der Stützvorrichtung bringt den Vorteil, dass sein Innenraum grundsätzlich von der Seite her zugänglich ist und so der Hohlraum innerhalb der Stützvorrichtung eine einfach zugängliche Einbringung von Leitungen und pneumatischen und elektrischen Komponenten, wie z.B. Langhubzylindern zur Wirbelschichtanlage, ermöglicht. Durch die zerstörungsfrei entfernbare Abdeckung sind die Leitungen gegen Einwirkungen von außen, auch Schmutz oder Staub, geschützt. Leitungen im Sinne der Erfindung bezeichnen beispielsweise elektrische (Mess-)Kabel, pneumatische Schläuche oder dergleichen. Die erfindungsgemäße Ausgestaltung der Stützvorrichtung hat zusätzlich den Vorteil, nachträglich und einfach weitere Zuleitungen der Wirbelschichtanlage zuführen zu können. Damit entfällt die Notwendigkeit, diese Zuleitungen oder pneumatische und elektrische Komponenten ungeschützt an der Außenseite entlang verlaufen zu lassen bzw. zu installieren.

Dabei beträgt die vertikale Längserstreckung des U-Profils ein Vielfaches seiner Quererstreckung. Das U-Profil weist insbesondere grundsätzlich einen U-Steg und zwei Schwenkel auf. U-Schenkel des Profils verlaufen in der Regel parallel zueinander und mit zueinander beabstandet sein. Sie können ferner durch einen U-Steg, der zu den beiden U-Schenkel rechtwinklig verläuft, miteinander verbunden sein.

Die erfindungsgemäße Vorrichtung bildet - insbesondere in ihren spezifischen Ausgestaltungen - gegenüber dem Stand der Technik erhebliche Vorteile. Kabel, Schläuche und Rohrleitungen können kontaminationsarm in das Innere der Stütze verlegt werden und machen dadurch die Gesamtanlage wesentlich reinigungsfreundlicher und GMP-konformer. Durch das einfache Öffnen der Stützenabdeckung in seiner gesamten Länge sind Leitungen leicht zu installieren und Aktoren (z. B. Langhubzylinder) durch die gute Zugänglichkeit direkt vor Ort ohne deren Ausbau leicht und einfach zu warten.

Die erfindungsgemäße Lösung schafft erstmals insbesondere die Kombination von drei wesentlichen Faktoren:
- die notwendige mechanische Stabilität des Stützenprofils bei aus konstruktiven Gründen vorgegebenen Maximalabmessungen,
- die Ausbildung des Profils in einer Art und Weise, dass dadurch automatisch definierte Räume für Aktoren, elektrische und pneumatische Leitungen geschaffen werden, und
- die Abdichtung des offenen Profils mit einer Abdeckung, die sowohl GPM-konform als auch ohne Werkzeug einfach und zeitsparend zu montieren und demontieren ist und das Profil über die gesamte Länge zugänglich macht.

In bevorzugten Ausgestaltungen ist vorgesehen, dass U-Schenkel des U-Profils aufeinander zu gerichtete Ansätze aufweisen, insbesondere an freien Enden der U-Schenkel, wobei insbesondere Federelemente die Ansätze formschlüssig untergreifen, wobei insbesondere weiterhin parallel und mit Abstand zu den U-Schenkeln zwischen diesen verlaufende Endabschnitte des U-Profils zur Ausbildung jeweils eines inneren Halteraums des U-Profils, in dem Kabel, Leitungen oder dergleichen aufnehmbar sind. Weiterhin ist in bevorzugter Ausgestaltung vorgesehen, dass das Begrenzungselement den Zwischenraum zwischen einem U-Schenkel und dem Endabschnitt überbrückt, wobei insbesondere mindestens ein lösbares Begrenzungselement F-förmig ausgestaltet ist und zwei Halteschenkel sowie einen Abdeckschenkel aufweist.

Die Abdeckung ist bevorzugt formschlüssig lösbar mit dem U-Profil verbunden. Diese Art der Ausgestaltung verhindert ein versehentliches Lösen der Abdeckung von der Stützvorrichtung und garantiert zudem einen festen Halt. Zudem ist diese Art der Anbringung günstig und zuverlässig.

Höchst vorzugsweise kann der Innenraum der Stützvorrichtung mindestens einen Kanal zum Führen von Leitungen aufweisen. Der Innenraum im Inneren der Stützvorrichtung bietet genügend Freiraum für die Ausgestaltung von mindestens einem Kanal. Die genaue Dimensionierung dieses Kabelkanals kann sich nach der Maximalanzahl und den Durchmessern der geführten Leitungen richten. Insbesondere sind zwei oder auch mehrere Kabelkanäle an der Innenseite möglich. Die Kabelkanäle ermöglichen eine besonders platzsparende Führung der Zuleitungen im Inneren der Stützvorrichtung.

Der Kanal kann dabei aus einem Teil des U-Profil-Schenkels, einem Ansatz und einem Endabschnitt gebildet sein. Hierdurch kann der Kabelkanal an das U-Profil angebracht sein und Raum für das Führen von Leitungen bieten.

Die Kabelkanäle sind nach mindestens einer Seite hin, insbesondere am U-Steg des U-Profils hin, offen ausgebildet und die offene Seite kann durch mindestens ein entfernbares Begrenzungselement begrenzt sein. Die Begrenzungselemente können dazu form- oder vorzugsweise kraftschlüssig an Teilen des U-Profils angebracht sein. Ferner können die Begrenzungselemente an dem Endabschnitt des Kabelkanals angebracht sein. Hierdurch wird ein Herausbewegen der Zuleitungen aus dem Kabelkanal vermieden.

Bevorzugt ist weiter vorgesehen, dass U-Schenkel des U-Profils aufeinander zu gerichtete Ansätze aufweisen.

Die Abdeckung kann einen Mittelabschnitt und zwei gebogene äußere Enden aufweisen. Die äußeren Enden können dabei in Richtung des U-Profils gebogen sein. Hierdurch ist es möglich, dass die Abdeckung eine nach außen hin konvexe Form und zum Innern des U-Profils eine konkave Form aufweist. Hierdurch werden definierte Kontaktstellen der Abdeckung mit der Stützvorrichtung geschaffen und damit ein sicherer Halt gewährleistet.

Die Abdeckung kann aus Kunststoff oder Metall, beispielsweise Edelstahl oder einer Aluminiumlegierung, gefertigt sein. In Abhängigkeit des verwendeten Materials kann dieses auch eloxiert und lackiert sein. Hierdurch können die Materialeigenschaften auf die individuellen Erfordernisse am Einsatzort abgestimmt werden.

Vorzugsweise kann eine Halteeinrichtung zum Befestigen der Abdeckung an der Stützvorrichtung vorgesehen sein, die Federelemente, angebracht an der Abdeckung, aufweist. Dies stellt eine besonders einfache und verlässliche Möglichkeit der Befestigung dar. Dabei ist insbesondere vorgesehen, dass Federelemente die Ansätze formschlüssig untergreifen.

Die Federelemente können jeweils einen Übergangsabschnitt, einen Halteabschnitt und einen Führungsabschnitt aufweisen, die insbesondere in dieser Reihenfolge, wobei vorzugsweise der von innen schräg auf die U-Schenkel zu gerichtete Halteabschnitt die Innenkante eines Endabschnitts hintergreift und so die Abdeckung am Profil festlegt. Die Führungsabschnitte der Führungselemente sind aufeinander zu gerichtet und greifen beim Aufsetzen der Abdeckung zwischen den Ansätzen ein, während die Halteabschnitte ausgehend von den inneren Enden der Übergangsabschnitte voneinander fortgerichtet sind und so die Ansätze oder Endabschnitte den U-Schenkel des U-Profils zum Halten der Abdeckung formschlüssig hintergreifen. In Kombination mit den elastischen Eigenschaften der Federelemente kann somit die Abdeckung zuverlässig haltend und gleichzeitig schnell entnehmbar an der Stützvorrichtung angebracht werden.

Das Begrenzungselement kann hierzu F-förmig ausgestaltet sein und zwei Halteschenkel sowie einen Abdeckschenkel aufweisen. Die zwei Halteschenkel des Begrenzungselements verlaufen dann parallel und beabstandet zueinander. Die Halteschenkel sind durch einen senkrecht zu den Halteschenkeln verlaufenden Abdeckschenkel miteinander verbunden. Der Abstand der Halteschenkel kann so dimensioniert sein, dass er eine Aufnahme des Endabschnitts des Kabelkanals ermöglicht und - über Verbindungselemente - so formschlüssig hieran angebracht werden kann. Vorzugsweise können die Begrenzungselemente aus Metall, insbesondere Edelstahl gefertigt sein und sind mit Schrauben befestigt.

Der Abdeckschenkel des Begrenzungselements kann dabei fast die gleiche Länge aufweisen wie die offene Seite des Kabelkanals. Hierdurch werden die Kabel besonders effektiv an einem Herausbewegen aus dem Kabelkanal gehindert.

Insbesondere ist die Stützvorrichtung an mindestens einer Stelle starr über Verbindungselemente mit einer Komponente der Wirbelschichtanlage zu verbunden. Zusätzlich oder alternativ hierzu ist die Stützvorrichtung vorzugsweise an mindestens einer Stelle elastisch über Sollbruchstellen mit einer Komponente der Wirbelschichtanlage verbunden. Die Art der Verbindung der Stützvorrichtung an die Wirbelschichtanlage kann sich nach den Erfordernissen des Einzelfalls richten um einen stabilen und sicheren Aufbau zu gewährleisten.

Die Innenseite der Stützvorrichtung kann mindestens eine Antriebskomponente für mindestens eine Komponente innerhalb der Wirbelschichtanlage aufweisen. Auf diese Weise entfällt auch hier die Notwendigkeit, diese Komponenten an der Au-βenseite der Stützvorrichtung anzubringen. Insbesondere in einer Kombination mit einem Durchbruch der Stützvorrichtung zum Inneren der Wirbelschichtanlage an mindestens einer Position ergeben sich hier vielfältige Möglichkeiten zu einem platzsparenden Aufbau.

Vorzugsweise kann die Außenseite der Stützvorrichtung mindestens ein Bedienelement und/oder eine Bedieneinheit aufweisen. Insbesondere erstere dient zur Bedienung der Wirbelschichtanlage und/oder von innerhalb der Stützvorrichtung geführten Komponenten. Auf diese Weise ist eine direkte Einwirkung und Steuerung auf solche Komponenten von außen durch den Benutzer möglich.

Vorzugsweise ist vorgesehen, dass das mindestens eine Bedienelement und/oder die Bedieneinheit höhenverstellbar angeordnet ist. Insbesondere sind die hierzu benötigen Leitungen im Inneren der Stützvorrichtung geführt. Auch der Mechanismus zur Einstellung der Höhe der Bedieneinheit kann im Inneren der Stützvorrichtung angebracht sein und ist dennoch zugänglich. Die Bedieneinheit kann beispielsweise einen Monitor samt Steuerungseinheiten wie eine Tastatur oder eine Maus umfassen.

Das Profil der Stützvorrichtung ist vorzugsweise vollständig, zumindest aber abschnittsweise aus Edelstahl gefertigt, was eine hohe Stabilität und zugleich Freiheit in der Ausgestaltung der Stützvorrichtung ermöglicht. In Abhängigkeit der Bedingungen am Einsatzort können besonders beanspruchte Komponenten der Stützvorrichtung zusätzlich verstärkt oder mit Verbundwerkstoffen versehen sein. Dies gilt insbesondere auch für die Kabelkanäle.

Die Verbindung der Stützvorrichtung mit dem Boden kann über mindestens eine Bodenplatte verwirklicht sein. Diese kann über Schrauben mit der Stützvorrichtung verbunden sein und bieten den Vorteil eines sicheren Aufbaus.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnung im Einzelnen erläutert sind. Dabei zeigen:
- Fig. 1: eine schematische Schnittzeichnung durch eine erfindungsgemäße Stützvorrichtung;
- Fig. 2: eine perspektivische Ansicht auf eine erfindungsgemäße Stützvorrichtung;
- Fig. 3: eine schematische Frontalansicht auf zwei erfindungsgemäße Stützvorrichtungen mit einer Wirbelschichtanlage und einer Bedieneinheit, und
- Fig. 4: eine schematische, perspektivische Sicht der Anordnung von Fig. 3.

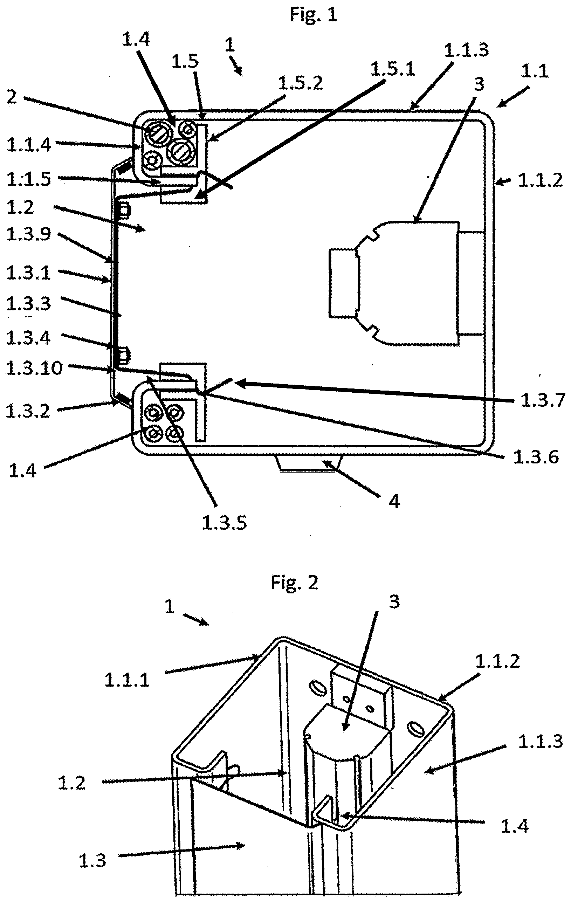

Fig. 1 zeigt im Querschnitt eine erfindungsgemäße säulenförmige Stützvorrichtung 1 für eine Wirbelschichtanlage 7. Die Stützvorrichtung 1 weist ein grundsätzlich langgestrecktes U-Profil 1.1 auf, dessen Wandung 1.1.1 einen U-Steg 1.1.2 und zwei parallel zueinander verlaufende U-Schenkel 1.1.3 sowie abgerundete Ecken hat. Die vertikale Längserstreckung beträgt ein Vielfaches der Quererstreckung von U-Steg 1.1.2 und U-Schenkel 1.1.3 in der Zeichnungsebene, deren Querabmessungen in der gleichen Größenordnung liegen und wiederum ein Vielfaches der Wandungsstärke betragen. Der Querschnitt ist nicht geschlossen, sondern weist - in der Darstellung der Fig. 1 - zur linken Stirnseite hin eine Öffnung 1.2 auf. Der Steg 1.1.2 der Stützvorrichtung 1 ist der Wirbelschichtanlage 7 zugewandt, die Öffnung 1.2 von dieser abgewandt. Die beiden freien Schenkel 1.1.3 des U-Profils 1.1 der Stützvorrichtung 1 weisen jeweils einen Ansatz 1.1.4 auf. Die Ansätze 1.1.4 sind zunächst mit Abstand parallel zum Steg 1.1.2 verlaufend aufeinander zugerichtet und weisen mit Abstand parallel zu den Schenkeln 1.1.3 ins Innere der Stützvorrichtung 1 gerichtete Endabschnitte 1.1.5 auf. Derart sind zwischen U-Schenkeln 1.1.3 und Ansätzen 1.1.4 mit den Endabschnitten 1.1.5 Kabelkanäle 1.4 gebildet. Die Kabelkanäle 1.4 werden weiter unten näher beschrieben. Die Wandung 1.1.1 der Stützvorrichtung 1 in der Regel aus Edelstahl.

Die Öffnung 1.2 der Stützvorrichtung 1 ist durch eine zerstörungsfrei lösbare Abdeckung 1.3 geschlossen. Die Abdeckung 1.3 weist einen ebenen Mittelabschnitt 1.3.1 und in Richtung des Innenraums des Profils 1.1 gebogene äußere Enden 1.3.2 auf. Die Abdeckung 1.3 weist so zum Inneren des U-Profils 1.1. der Stützvorrichtung konkave Form, nach außen hin konvexe Form auf. Im Betriebszustand liegen die Enden 1.3.2 der Abdeckung 1.3 jeweils auf der Außenwand der Ansätze 1.1.4 auf. Die Abdeckung 1.3 kann aus Kunststoff oder Metall wie Edelstahl oder auch Aluminiumlegierung ausgebildet sein und je nach Material lackiert oder eloxiert sein.

Die Abdeckung 1.3 weist zur Befestigung über die Höhe der Abdeckung 1.3 zwei, vorzugsweise mehr als zwei, Federelemente 1.3.3 auf. Diese sind jeweils an der Innenseite der Abdeckung 1.3 durch Schrauben 1.3.4 befestigt. Die Federelemente 1.3.3 weisen je ein Mittelteil 1.3.9 auf, das entlang des Mittelteils 1.3.1 der Abdeckung 1.3 und hinter diesen verläuft. Ferner weisen die Federelemente 1.3.3 jeweils zwei äußere, ins Innere des U-Profils 1.1 gebogene Schenkel 1.3.10 auf. Diese ragen seitlich in den Innenraum des U-Profils 1.1. Durch sie wird die Abdeckung 1.3 an der Wandung 1.1.1 des U-Profils 1.1 befestigt. Die Schenkel 1.3.10 der Federelemente 1.3.3 weisen jeweils von der Abdeckung 1.3 schräg fort verlaufenden Übergangsabschnitte 1.3.5 auf. Der relative Abstand der Übergangsabschnitte 1.3.5 vergrößert sich dabei von ihrem Befestigungsende an der Abdeckung 1.3 zu ihrem von dieser entfernten Ende leicht. An die Übergangsabschnitte 1.3.5 schließt sich jeweils ein Halteabschnitt 1.3.6 an, diese sind voneinander fort nach außen gerichtet. Weiter schließt sich ein Führungsabschnitt 1.3.7 der Federelemente 1.3.3 an, die Führungsabschnitte 1.3.7 verlaufen von der der Abdeckung 1.3 fort aber schräg aufeinander zu. Der Abstand ihrer freien Enden im unbelasteten Zustand ist dabei gleich dem Abstand der Endabschnitte 1.1.5 der Profile 1.1 oder etwas geringer.

Das Befestigen der Abdeckung 1.3 am U-Profil 1.1 erfolgt durch Aufdrücken der Abdeckung 1.3. Dabei gleiten die freien Enden der Federelemente 1.3.3 gegebenenfalls an den Abrundungen zwischen den Führungsabschnitten 1.3.7 und den Ansätzen 1.1.4 und der Endabschnitte 1.1.5 und auf jeden Fall (anschließend) an den Endabschnitten 1.1.5 entlang. Die Federelemente 1.3.3 werden dabei aufeinander zugebogen. Sobald die Halteabschnitte 1.3.6 an ihrem freien Ende der Endabschnitte 1.1.5 der Ansätze 1.1.3 anliegen, werden die Federelemente 1.3.3 freigegeben, schnappen voneinander fort, so dass die Halteabschnitte 1.3.6 bzw. die Endabschnitte 1.1.5 der Ansätze 1.1.4 hintergreifen und die Abdeckung 1.3 so formschlüssig lösbar am Profil 1.1 halten.

Das zerstörungsfreie Lösen der Abdeckung erfolgt durch Abziehen derselben, wobei die Federelemente 1.3.3 durch ihre Elastizität nachgeben und die Abdeckung 1.3 gelöst werden kann. Gegebenenfalls können in der freien Kante der Endabschnitte 1.1.5. Auf der Höhe der vorhandenen Federelemente 1.3.3 können Einschnitte ausgebildet sein, in die die Federelemente 1.3.3 einrasten, so dass sie durch die Einschnitte auch formschlüssig auf eine vorgesehene oder gewünschte Position gehalten werden.

Die Kabelkanäle 1.4 weisen im Querschnitt ein kleines U-Profil auf und dienen zum Führen von Leitungen 2. Bei diesen Leitungen 2 handelt es sich um elektrische Kabel und pneumatische Schläuche. Diese werden durch Begrenzungselemente 1.5 an der freien Seite des Kabelkanals 1.4 an einem Verlassen desselben gehindert.

Die Begrenzungselemente 1.5 sind über Schrauben an den Endabschnitten 1.1.5 der Ansätze 1.1.4 befestigt. Die Begrenzungselemente 1.5 sind ferner F-förmig mit zwei parallel verlaufenden Halteschenkeln 1.5.1 und einem sich senkrecht zu diesen erstreckenden Abdeckschenkel 1.5.2 ausgestaltet. Der Zwischenraum zwischen den beiden Halteschenkeln 1.5.1 nimmt den abgrenzenden Endabschnitt 1.1.5 des Ansatzes 1.1.4 auf (der Zwischenraum der Halteschenkel 1.5.1 entspricht der Stärke des Endabschnitts 1.1.5). Die Halteschenkel 1.5.1 bestehen aus Edelstahl. Der Abdeckschenkel 1.5.2 des Begrenzungselements 1.5 ist dabei fast gleich lang wie der offene Bereich des Kabelkanals 1.4, so dass er diesen im angebrachten Zustand überdeckt und vor der Innenseite der Wand 1.1 der Stützvorrichtung 1 endet. In dieser Position ist ein Herausbewegen der Zuleitung 2 aus dem Kabelkanal 1.4 durch das Begrenzungselement 1.5 vermieden.

Höhenmäßig erstrecken sich die Begrenzungselemente 1.5 nicht über die gesamte Höhe des Kabelkanals 1.4. Insbesondere auf der Höhe der Durchbrüche für die Federelemente 1.3.3 ist kein Begrenzungselement 1.5 vorgesehen. Die Begrenzungselemente 1.5 können eine geringe Höhe gegenüber der Höhe der Stützvorrichtung 1 haben.

Am U-Steg 1.1.2 der Stützvorrichtung 1 ist ein Linearantrieb 3 angebracht. Dieser weist einen Linearzylinder auf und dient zum Bewegen eines beweglichen Teils von Filtern im Inneren der Wirbelschichtanlage 7. Hierauf wird weiter unten eingegangen. Die Zuführung zum Innern der Wirbelschichtanlage 7 erfolgt durch einen Durchbruch an der Oberseite der Stützvorrichtung 1.

An der Stützvorrichtung 1 befinden sich Bedienelemente wie Tasten und/oder Schalter 4. Diese sind über Leitungen 2 (nicht eingezeichnet) mit Komponenten innerhalb der Wirbelschichtanlage 7 verbunden und dienen zu deren Steuerung.

Fig. 2 zeigt eine Stützvorrichtung 1 in einer perspektivischen Darstellung von schräg oben samt Abdeckung 1.3. Ferner ist das U-Profil 1.1 der Stützvorrichtung 1 ersichtlich, sowie der der Öffnung 1.2 gegenüberliegende Linearantrieb 3. Ansonsten wird auf die Beschreibung zu Fig. 1 verwiesen.

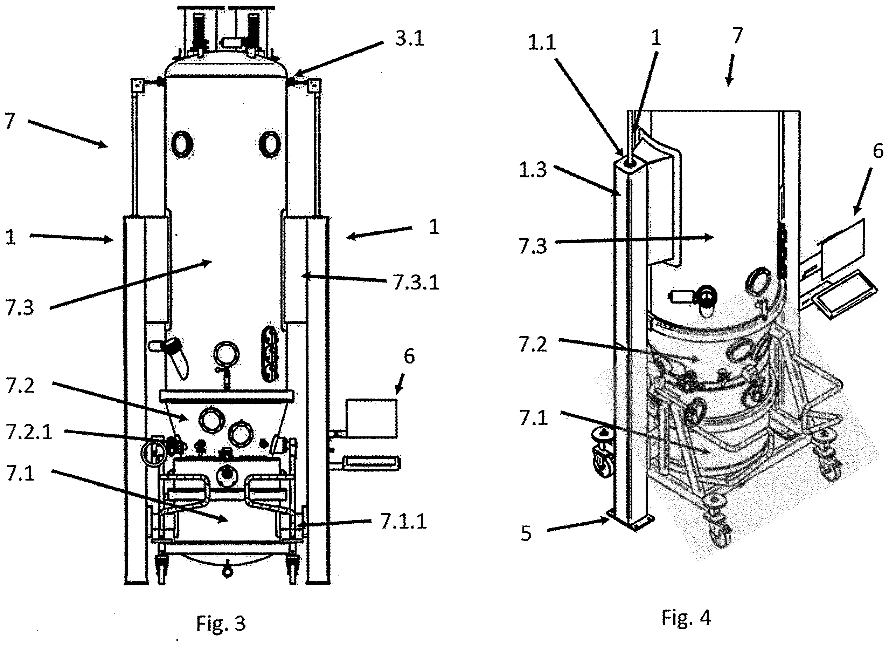

Fig. 3 zeigt eine Wirbelschichtvorrichtung aus zwei erfindungsgemäßen Stützvorrichtungen 1 und einer dazwischen sich befindlichen Wirbelschichtanlage 7. Die Wirbelschichtanlage 7 weist drei Komponenten auf: Ein Unterteil 7.1, eine Expansionszone 7.2 und eine Filterzone 7.3.

Die Wirbelschichtanlage 7 weist ein Unterteil 7.1 auf. Im Unterteil 7.1 wird eine nach oben gerichtete Strömung des Wirbelmediums, etwa Luft oder Gas, geführt. In Strömungsrichtung nach oben trifft das Wirbelmedium auf ein Wirbelgut, das in der Expansionszone 7.2 der Wirbelschichtanlage 7 eingebracht wird. Das Wirbelgut liegt als Teilchen, pulverförmig oder granular in der Expansionszone 7.2 vor.

Die Expansionszone 7.2 weist an ihrer Unterseite Öffnungen auf, deren Dimensionen klein genug sind, um das Wirbelgut, ähnlich wie bei einem Sieb, am Hindurchfallen zu hindern. Durch diese Öffnungen strömt das Wirbelmedium und trifft dabei auf das Wirbelgut in der Expansionszone 7.2. Dabei findet eine Verwirbelung von Wirbelmedium mit dem Wirbelgut statt. Filter in der oberen Filterzone 7.3 verhindern ein Austreten des Wirbelguts.

Sowohl das Unterteil 7.1 als auch die Filterzone 7.3 der Wirbelschichtanlage 7 sind weitgehend zylinderförmig ausgestaltet, wogegen die Expansionszone 7.2 die Form eines Kegelstumpfs aufweist. Filterzone 7.3 und Expansionszone 7.2 bilden ein Oberteil der Wirbelschichtanlage 7.

Die Wirbelschichtanlage 7 in Fig. 3 ist zu beiden Seiten mit jeweils einer erfindungsgemäßen Stützvorrichtung 1 befestigt. Die Filterzone 7.3 der Wirbelschichtanlage 7 ist mit den Stützvorrichtungen über Verbindungselemente 7.3.1 fest verbunden. Das Unterteil 7.1 ist mit den Stützvorrichtungen 1 über Verbindungen 7.1.1 verbunden. Elastische oder sonstige Leitungen können über Durchbrüche im U-Steg 1.1.2 der Stützvorrichtung 1 und in der Wandung der Wirbelschichtanlage 7 frei und gegebenenfalls auch durch das Verbindungselement 7.1.1 in die Anlage 7 geführt sein. Von der Stützvorrichtung 1 führt ein Seilzug 3.1 zu den beweglichen Teilen von Filtern in der Wirbelschichtanlage 7 um diese abzusenken oder anzuheben.

Ferner ist in Fig. 3 auf der rechten Seite der rechten Stützvorrichtung 1 wiederum die Steuereinheit 6 ersichtlich.

Fig. 4 zeigt den gleichen Aufbau wie Fig. 3, jedoch aus einer Perspektive von schräg links. Auch hier sind die erfindungsgemäße Stützvorrichtungen 1, die Wirbelschichtanlage 7 und die Steuereinheit 6 ersichtlich. Aus Fig. 4 geht hierbei insbesondere hervor, dass die erfindungsgemäße Stützvorrichtung 1 an ihrer Unterseite auf einer Bodenplatte 5 befestigt ist. Dies kann beispielsweise durch Schrauben erfolgen.

Das Einbringen neuer Kabel in eine erfindungsgemäße Stützvorrichtung 1 gestaltet sich wie folgt: Zunächst ist die Abdeckung 1.3 der Stützvorrichtung 1 abzunehmen. Dies geschieht einfach und schnell durch den oben erwähnten Haltemechanismus der hintergreifenden Federelemente 1.3.3. Damit ist der durch das U-Profil der Wandung 1.1 freigewordene Innenraum durch den Benutzer erreichbar. Neue Kabel 2 sind nun in den Innenraum der Stützvorrichtung 1 einzubringen und zwar in die seitlichen Kabelkanäle 1.4. Hierzu werden die Begrenzungselemente 1.5 an den offenen Seiten der Kabelkanäle 1.4 gelöst, die neuen Kabel werden in die Kabelkanäle 1.4 eingelegt und anschließend werden die Begrenzungselemente 1.5 wieder vor den Freiraum der Kabelkanäle 1.4 befestigt. Derart werden die Kabel 2 sicher in den Kabelkanälen 1.4 gehalten und ein Herausfallen von Kabeln 2 innerhalb der Stützvorrichtung 1 wird verhindert. Anschließend wird die Abdeckung 1.3 unter Zuhilfenahme der Federelemente 1.3.3 in der bereits beschriebenen Weise angebracht.

Die Bedienung von Komponenten der Wirbelschichtanlage 7 geschieht durch die Bedienelemente 4 an der Stützvorrichtung 1. Hierdurch kann beispielsweise der Linearzylinder 3 in der Stützvorrichtung 1 bewegt werden. In Folge der Bewegung des Linearzylinders 3 können die Filter der Filterzone 7.3 von außen bewegt werden, ohne dass ein Zugriff auf die zentrale Steuereinheit der Wirbelschichtanlage 7 erfolgen müsste.

Der momentane Zustand des Wirbelschichtprozesses innerhalb der Wirbelschichtanlage 7 kann, wie bereits beschrieben, durch Sensoren ausgelesen werden. Die Sensoren im Innern der Wirbelschichtanlage 7 sind über Leitungen 2 an die Steuereinheit 6 der Stützvorrichtung 1 angeschlossen, die gemäß Fig. 3 und Fig. 4 als Computer dargestellt ist. Hier kann der Benutzer die Parameter des Prozesses einsehen und über Eingabeelemente wie eine Tastatur, ein Touchpad oder dergleichen entsprechend Notwendigkeit oder Wünschen verändern, ohne Zugriff auf das Innere der Wirbelschichtanlage 7 haben zu müssen.

## Patentansprüche

1. Wirbelschichtanlagen-Stützvorrichtung, die an mindestens einer Stelle mit einer Wirbelschichtanlage (7) verbindbar ist, *mit* einem U-Profil (1.1) mit einer Öffnung (1.2) an einer Seite und einer zerstörungsfrei entfernbaren Abdeckung (1.3) der Öffnung (1.2), *mit* parallel und mit Abstand zu U-Schenkeln (1.1.3) des U-Profils (1.1) zwischen diesen verlaufenden Endabschnitten (1.5.1) zur Ausbildung jeweils eines inneren Kanals (1.4) des U-Profils, ***gekennzeichnet* durch** eine an mindestens einer Seite zu einem U-Steg des U-Profils hin offene Ausbildung des Kanals (1.4) zur Aufnahme von Kabeln, Leitungen oder dergleichen.

2. Vorrichtung nach Anspruch 1, **dadurch gekennzeichnet, dass** die Abdeckung (1.3) sich ein oder mehrteilig über der Gesamthöhe der Stützvorrichtung (1) oder des U-Profils (1.1) erstreckt.

3. Vorrichtung nach Anspruch 1 oder 2 , **dadurch gekennzeichnet, dass** die Abdeckung (1.3) formschlüssig lösbar mit dem U-Profil (1.1) verbunden ist.

4. Vorrichtung nach einem der vorangehenden Ansprüche, **dadurch gekennzeichnet, dass** U-Schenkel (1.1.3) des U-Profils (1.1) aufeinander zu gerichtete Ansätze (1.1.4) aufweisen, insbesondere an freien Enden der U-Schenkel (1.1.3), wobei insbesondere Federelemente (1.3.3) die Ansätze (1.1.4) formschlüssig hintergreifen.

5. Vorrichtung nach einem der vorangehenden Ansprüche, **dadurch gekennzeichnet, dass** der mindestens eine Kanal (1.4) aus einem Teil des U- Schenkels (1.1.3), einem Ansatz (1.1.4) und dem Endabschnitt (1.1.5) gebildet ist.

6. Vorrichtung nach einem der vorangehenden Ansprüche, **dadurch gekennzeichnet, dass** die offene Seite des Kanals (1.4) durch mindestens ein lösbares Begrenzungselement (1.5) begrenzt ist, das sich zumindest über einen Teil der Höhe eines Leitkabels (1.4), insbesondere dessen Gesamthöhe erstreckt.

7. Vorrichtung nach einem der vorangehenden Ansprüche, **dadurch gekennzeichnet dass** das Begrenzungselement den Zwischenraum zwischen einem U-Schenkel (1.1.3) und dem Endabschnitt (1.1.5) überbrückt, wobei insbesondere mindestens ein lösbares Begrenzungselement (1.5) F-förmig ausgestaltet ist und zwei Halteschenkel (1.5.1) sowie einen Abdeckschenkel (1.5.2) aufweist.

8. Vorrichtung nach einem der vorangehenden Ansprüche, **dadurch gekennzeichnet, dass** die Abdeckung (1.3) einen Mittelabschnitt (1.3.1) und zwei gebogene äußere Enden (1.3.2) aufweist.

9. Vorrichtung nach einem der vorangehenden Ansprüche, **dadurch gekennzeichnet, dass** eine Halteeinrichtung zum Befestigen der Abdeckung (1.3) an der Stützvorrichtung (1) über die Höhe der Abdeckung (1.3) mindestens zwei Federelemente (1.3.3) aufweist, die an der Abdeckung (1.3) befestigt sind.

10. Vorrichtung nach einem der vorangehenden Ansprüche, **dadurch gekennzeichnet, dass** die Federelemente (1.3.3) einen Übergangsabschnitt (1.3.5), einen Halteabschnitt (1.3.6) und einen Führungsabschnitt (1.3.7) aufweisen, die insbesondere in dieser Reihenfolge, wobei vorzugsweise der von innen schräg auf die U-Schenkel (1.1.3) zu gerichtete Halteabschnitt (1.3.6) die Innenkante eines Endabschnitts (1.1.5) hintergreift und so die Abdeckung (1.3) am Profil (1.1) festlegt.

11. Vorrichtung (1) nach einem der vorangehenden Ansprüche, **gekennzeichnet durch** mindestens ein Bedienelement (4) und/oder einer Bedieneinheit an einer Außenseite des U-Profils (1.1), wobei insbesondere das mindestens eine Bedienelement (4) und/oder die Bedieneinheit (6) höhenverstellbar angeordnet ist.

12. Wirbelschichtanlage mit einer Stützvorrichtung nach einem der vorangehenden Ansprüche, **dadurch gekennzeichnet, dass** die Stützvorrichtung an mindestens einer Stelle starr über Verbindungselemente (7.3.1) oder elastisch mit einer Komponente der Wirbelschichtanlage (7) verbindbar ist.

13. Wirbelschichtanlage nach Anspruch 13, **gekennzeichnet durch** einen Durchbruch der Stützvorrichtung (1) zur Wirbelschichtanlage (7) hin an mindestens einer Stelle.

## Claims

1. Fluidised bed units support device, which is in at least at one position with the fluidised bed unit connectable(7), with an U-profile (1.1) with an opening (1.2) at one side and a non destructively removable cover (1.3) of the opening (1.2), with end portions (1.5.1) of the U-profile (1.1) extending parallel to and being spaced apart from the U-legs (1.1.3) between the U-legs(1.1.3) for respectively forming an inner channel (1.4) of the U-profile **characterised by** a design of the channel (1.4), being open at least towards one side at an U-base (1.1.2)of the U-profil, for receiving of cables, lines or the like are.

2. Device according to claim 1, **characterised in that** the cover (1.3) extends in one part or in a plurality of parts over the total height of the support device (1) or the U-profile (1.1).

3. Device according to claim 1 or 2, **characterised in that** the cover (1.3) is removably connected with the U-profile (1.1) in a form fit.

4. Device according to one of the preceding claims, **characterised in that** U-legs (1.1.3) of the U-profile (1.1) comprise extensions (1.1.4), which are directed facing each other, in particular at free ends of the U-legs (1.1.3), wherein in particular spring elements (1.3.3) engage behind the extensions (1.1.4) in a form fit.

5. Device according to one of the preceding claims, **characterised in that** at least the one channel (1.4) is formed by a portion of the U-legs (1.1.3), an extension (1.1.4) and the end portion (1.1.5).

6. Device according to one of the preceding claims, **characterised in that** the open side of the channel (1.4) is delimited by at least one detachable limiting element (1.5) extending at least partially over the height of a lead cable (1.4), in particular over its total height.

7. Device according to one of the preceding claims, in that the limiting element (1.5) bridges the gap between a U-leg (1.1.3) and the end portion (1.1.5), wherein in particular at least one detachable limiting element (1.5) is formed in a F-shape comprising two holding legs (1.5.1) and a covering leg (1.5.2).

8. Device according to one of the preceding claims, **characterised in that** the cover (1.3) comprises a central portion (1.3.1) and two bent outer ends (1.3.2)

9. Device according to one of the preceding claims, **characterised in that** a holding device for fixing the cover (1.3) at the support device (1) comprises at least two spring elements (1.3.3) over the height of the cover (1.3), which are fixed to the cover (1.3).

10. Device according to one of the preceding claims, **characterized in that** the spring elements (1.3.3) comprise a transition portion (1.3.5), a holding portion (1.3.6) and a guiding portion (1.3.7), which are particularly arranged in this order, wherein preferably the holding portion (1.3.6), which is obliquely directed onto the U-leg (1.1.3) from inside, engages behind the inner edge of an end portion (1.1.5) thereby securing the cover (1.3) at the profile (1.1).

11. Device (1)according to one of the preceding claims, **characterised by** at least one control element (4) and/or a control unit (6) at an outside of the U-profile (1.1), wherein in particular at least the one control element (4) and/or the control unit (6) is arranged in a height-adjustable manner.

12. Fluidized bed unit with a support device in accordance with one of the preceding claims, **characterised in that** the support device is connected in at least one position rigidly by means of connectable elements (7.3.1) or elastically with a component of the fluidised bed unit (7).

13. Fluidized bed unit in accordance with claim 12, **characterised by** an aperture of the support device (1) to the fluidised bed unit (7) in at least one position.

## Revendications

1. Dispositif d'appui pour installation à lit fluidisé pouvant être relié en au moins un point avec une installation à lit fluidisé (7), avec un profilé en U (1.1) avec une ouverture (1.2) au niveau d'un côté et avec un cache (1.3) de l'ouverture (1.2) pouvant être retiré sans destruction, avec des sections d'extrémité (1.5.1) s'étendant entre les branches du U (1.1.3) du profilé en U (1.1), parallèlement et à une certaine distance de celles-ci, pour former respectivement un canal intérieur (1.4) du profilé en U, **caractérisé par** une forme du canal (1.4) ouverte au niveau d'au moins un côté vers un étai en U du profilé en U pour loger les câbles, conduites ou leur équivalent.

2. Dispositif selon la revendication 1, **caractérisé en ce que** le cache (1.3) s'étend en une ou plusieurs parties sur la hauteur totale du dispositif d'appui (1) ou du profilé en U (1.1).

3. Dispositif selon la revendication 1 ou 2, **caractérisé en ce que** le cache (1.3) est relié de façon amovible au profilé en U (1.1), par complémentarité de formes.

4. Dispositif selon l'une quelconque des revendications précédentes, **caractérisé en ce que** les branches de U (1.1.3) du profilé en U (1.1) comportent des appendices (1.1.4) orientés les uns vers les autres, notamment au niveau des extrémités libres des branches de U (1.1.3), les éléments de ressort (1.3.3) saisissant notamment par derrière les appendices (1.1.4), par complémentarité de formes.

5. Dispositif selon l'une quelconque des revendications précédentes, **caractérisé en ce que** l'au moins un canal (1.4) se compose d'une partie de la branche de U (1.1.3), d'un appendice (1.1.4) et de la section d'extrémité (1.1.5).

6. Dispositif selon l'une quelconque des revendications précédentes, **caractérisé en ce que** le côté ouvert du canal (1.4) est délimité par au moins un élément délimitant (1.5) amovible s'étendant au moins sur une partie de la hauteur d'un câble conducteur (1.4), notamment sur la totalité de sa hauteur.

7. Dispositif selon l'une quelconque des revendications précédentes, **caractérisé en ce que** l'élément délimitant jette un pont sur l'espace intermédiaire entre une branche de U (1.1.3) et la section d'extrémité (1.1.5), au moins un élément délimitant (1.5) amovible étant notamment configuré en forme de F et comportant deux branches de maintien (1.5.1) ainsi qu'une branche de recouvrement (1.5.2).

8. Dispositif selon l'une quelconque des revendications précédentes, **caractérisé en ce que** le cache (1.3) comporte une section centrale (1.3.1) et deux extrémités extérieures (1.3.2) incurvées.

9. Dispositif selon l'une quelconque des revendications précédentes, **caractérisé en ce qu'**un dispositif de maintien comporte au moins deux éléments de ressort (1.3.3) fixés au cache (1.3) pour la fixation du cache (1.3) au dispositif d'appui (1) sur toute la hauteur du cache (1.3).

10. Dispositif selon l'une quelconque des revendications précédentes, **caractérisé en ce que** les éléments de ressort (1.3.3) comportent une section de transition (1.3.5), une section de maintien (1.3.6) et une section de guidage (1.3.7), notamment dans cet ordre, la section de maintien (1.3.6) orientée de façon oblique depuis l'intérieur sur les branche de U (1.1.3) saisissant de préférence par derrière l'arête intérieure d'une section d'extrémité (1.1.5) et fixant ainsi le cache (1.3) au niveau du profilé (1.1).

11. Dispositif (1) selon l'une quelconque des revendications précédentes, **caractérisé par** la présence d'au moins un élément de commande (4) et/ou d'une unité de commande au niveau d'un côté extérieur du profilé en U (1.1), l'au moins un élément de commande (4) et/ou l'unité de commande (6) étant notamment disposés de façon à être réglables en hauteur.

12. Installation à lit fluidisé dotée d'un dispositif d'appui selon l'une quelconque des revendications précédentes, **caractérisée en ce que** le dispositif d'appui peut être relié en au moins un point à un composant de l'installation à lit fluidisé (7), de façon élastique ou de façon rigide par l'intermédiaire d'éléments de liaison (7.3.1).

13. Installation à lit fluidisé selon la revendication 13, **caractérisée par** la présence d'un passage traversant du dispositif d'appui (1) conduisant à l'installation à lit fluidisé (7), au moins en un point.
